Europäisches Patentamt

European Patent Office

Office européen des brevets

(19)

(11)　**EP 1 092 180 B1**

(12)　**EUROPÄISCHE PATENTSCHRIFT**

(45) Veröffentlichungstag und Bekanntmachung des Hinweises auf die Patenterteilung:
**02.10.2002　Patentblatt 2002/40**

(21) Anmeldenummer: **99914483.5**

(22) Anmeldetag: **06.03.1999**

(51) Int Cl.[7]: **G05D 16/02**, G05D 16/10

(86) Internationale Anmeldenummer:
**PCT/EP99/01453**

(87) Internationale Veröffentlichungsnummer:
**WO 00/002109 (13.01.2000 Gazette 2000/02)**

(54) **DRUCKREGELVENTIL MIT HYDRODYNAMISCHER DÄMPFUNG**

PRESSURE CONTROL VALVE WITH HYDRODYNAMIC DAMPING

SOUPAPE DE REGULATION DE PRESSION A AMORTISSEMENT HYDRODYNAMIQUE

(84) Benannte Vertragsstaaten:
**AT CH DE FR GB IT LI SE**

(30) Priorität: **01.07.1998　DE 19829394**

(43) Veröffentlichungstag der Anmeldung:
**18.04.2001　Patentblatt 2001/16**

(73) Patentinhaber: **Hydac Fluidtechnik GmbH
66280 Sulzbach/Saar (DE)**

(72) Erfinder:
 • **BRUCK, Peter
 D-66482 Zweibrücken (DE)**

 • **HILLESHEIM, Thorsten
 D-66119 Saarbrücken (DE)**

(74) Vertreter: **Crazzolara, Helmut, Dr.
 Patentanwälte Bartels & Partner,
 Lange Strasse 51
 70174 Stuttgart (DE)**

(56) Entgegenhaltungen:
 **FR-A- 2 394 846　　　FR-A- 2 551 525
 US-A- 3 945 399　　　US-A- 5 050 636**

## Beschreibung

Die Erfindung betrifft ein Druckregelventil mit einem in einer Ventilbohrung bewegbaren Regelkolben gemäß dem Oberbegriff des Anspruchs 1.

Bei Druckregelventilen nach dem Stand der Technik wird der Regelkolben durch die Wirkung eines Kraftspeichers in seiner Ausgangsstellung gehalten. In einer Auslenkrichtung verbindet das Druckregelventil einen Pumpenanschluß mit einem Verbraucheranschluß. In der anderen Auslenkrichtung verbindet das Druckregelventil unter Absperren des Pumpenanschlusses den Verbraucheranschluß mit einem Tankanschluß. Übersteigt der Druck am Verbraucheranschluß den vorgebbaren Sollwert, so wird der Regelkolben so weit gegen die Kraft des Kraftspeichers ausgelenkt und dadurch der Strömungsquerschnitt zwischen Pumpenanschluß und Verbraucheranschluß reduziert, bis der Druck am Verbraucheranschluß dem vorgebbaren Sollwert entspricht. Bei einem entsprechenden Überschreiten des Sollwertes wird der Regelkolben sogar so weit gegen die Kraft des Kraftspeichers ausgelenkt, daß es zu einer Druckentlastung vom Verbraucheranschluß zum Tankanschluß kommt.

Bei den bekannten Druckregelventilen ist von Nachteil, daß es bei schnellen Regelvorgängen aufgrund des Feder-Masse-Systems, insbesondere im Bereich des Regelkolbens, zu Instabilitäten im Regelverhalten kommt.

Die DE 35 05 377 C2 zeigt ein Druckregelventil, bei dem ein von einem Elektromagneten bewegbarer Regelkolben in einem axial geschlossenen Verteilergehäuse verschiebbar ist.

Die DE-OS-27 00 058 zeigt ein Stromregelventil, bei der ein in einer Bohrung in dem Regelkolben axial verschiebbarer und mit der Bohrung einen Ringspalt ausbildender Tauchkolben eine Dämpfungseinrichtung für die Bewegung des Regelkolbens bildet.

Die FR 2 394 846 zeigt ein Druckregelventil mit einem in einer Ventilbohrung bewegbaren Regelkolben, der unter der Wirkung eines Kraftspeichers in einer Auslenkrichtung einen Pumpenanschluß mit einem Ausgangsanschluß verbindet und bei dem ein zwischen einer von dem Ventilkörper gebildeten Dämpfungskammer und einem ringförmigen Aufnahmeraum, der durch das Einschrauben des Ventils in ein Maschinengehäuse gebildet ist, oder einem externen Reservoir fließender Volumenstrom eine Dämpfung der Auslenkung des Regelkotbens bewirkt.

Der vorliegenden Erfindung liegt daher das Problem zugrunde, ein Druckregelventil bereitzustellen, welches auch bei hoher Regeldynamik einen zuverlässigen und stabilen Betrieb garantiert. Der konstruktive Aufwand zur Vermeidung der Instabilitäten soll dabei möglichst gering sein, insbesondere soll die Anzahl der Einzelteile des Druckregelventils möglichst klein sein.

Das Problem wird durch das im Anspruch 1 offenbarte Druckregelventil gelöst. Besondere Ausführungsarten der Erfindung sind in den Unteransprüchen offenbart.

Die Lösung des Problems gemäß Anspruch 1 geht von einem Druckregelventil mit einem in einer Ventilbohrung bewegbaren Regelkolben aus, der unter der Wirkung eines Kraftspeichers in einer Auslenkrichtung einen Pumpenanschluß mit einem Verbraucheranschluß und in der anderen Auslenkrichtung unter Absperren des Pumpenanschlusses den Verbraucheranschluß mit einem Tankanschluß verbindet und löst das Problem dadurch, daß Mittel vorgesehen sind, durch die unabhängig von der Auslenkrichtung des Regelkolbens ein zwischen diesem und der Ventilbohrung eine Dämpfung der Auslenkbewegung des Regelkolbens bewirkender Volumenstrom vorhanden ist, insbesondere daß ein in einem von dem Regelkolben und der Ventilbohrung gebildeten Ringspalt vorhandener Volumenstrom eine Dämpfung der Auslenkbewegung des Regelkolbens bewirkt. Vorzugsweise ist der Volumenstrom klein und insbesondere nur so groß, wie es die Dämpfung erfordert.

Vorteilhaft bei der erfindungsgemäßen Lösung ist, daß die Dämpfung über einen Ringspalt erfolgt, der direkt im Druckmittelkanal liegt, und das Dämpfungsvolumen mit dem Druckmittel-Volumenstrom gekoppelt ist. Darüber hinaus ist die Anordnung hinsichtlich der Dämpfungswirkung totvolumenfrei. Diese Vorteile stellen sich insbesondere bei direkt gesteuerten Druckreglern ein, bei denen die Dämpfungsmöglichkeiten grundsätzlich eingeschränkt sind.

Die Dämpfung des Regelkolbens mittels des Volumenstroms bzw. des damit einhergehenden Druckaufbaus hat außerdem den Vorteil, daß die Dämpfungswirkung über den Anteil der durch den Schlepp- oder Verdrängungsstrom verursachten Reibungskraft von der Geschwindigkeit des Regelkolbens abhängig ist und über den Anteil einer durch einen vom Pumpenausschluß zum Verbraucheranschluß fließenden Leckagestrom verursachten Reibungskraft von der Druckdifferenz zwischen dem Pumpenanschluß und dem Verbraucheranschluß abhängig ist. Damit ergibt sich ein besonders günstiges Dämpfungs- und damit Regelverhalten des Druckregelventils. Die Anteile des Leckage- und Schlepp- oder Verdrängungsstromes können besonders einfach und vorteilhaft durch die geometrische Gestaltung des Druckregelventils, insbesondere des Regelkolbens eingestellt werden. Durch den Angriff der Reibungskräfte an der Mantelfläche des vorzugsweise zylindrischen Regelkolbens ist eine besonders gleichmäßige Krafteinwirkung und damit ein besonders gutes Regel- und Dämpfungsverhalten des Druckregelventils erreichbar.

Die besondere Ausführungsart der Erfindung gemäß Anspruch 2 hat den Vorteil, daß Richtung und Betrag des Schleppstroms vorgebbar sind, insbesondere daß vorgebbar ist, daß der Schleppstrom an dem, gegenüber dem Pumpenanschluß üblicherweise einen geringeren Druck aufweisenden Verbraucheranschluß in das Druckregelventil eintritt.

Die besondere Ausführungsarten der Erfindung gemäß den Ansprüchen 3 und 4 haben den Vorteil, daß durch die zwischen den beiden Abschnitten mit unterschiedlichem Durchmesser des Regelkolbens gebildete Stufe bei einer axialen Auslenkung des Regelkolbens zwischen der Stufe des Regelkolbens und der ihr entsprechenden Stufe der Ventilbohrung ein hohlzylindrisches Volumen sich verkleinert oder vergrößert, in welches der über den größeren Ringspalt am Verbraucheranschluß strömende Schleppoder Verdrängungsstrom ein- oder ausströmen kann. Durch die geometrische Gestaltung sowohl der Stufe als auch des Ringspaltes kann die Dämpfungscharakteristik des Druckregelventils einfach aber präzise eingestellt und an verschiedene Anwendungssituationen angepaßt werden. Beispielsweise ist die Regel- und Dämpfungscharakteristik eines Druckregelventils durch Austauschen des Regelkolbens möglich.

Die besondere Ausführungsart der Erfindung gemäß Anspruch 6 hat den Vorteil, daß Schraubenfedern zuverlässige, kostengünstige und langlebige Kraftspeicher darstellen und zudem in nahezu jeder gewünschten Dimensionierung verfügbar sind. Alternativ zu Schraubenfedern kommen andere mechanische Kraftspeicher, wie etwa eine Blattfeder oder ein elastisches Element, oder pneumatische oder hydraulische Druckspeicher in Betracht.

Die besondere Ausführungsart der Erfindung gemäß Anspruch 7 hat den Vorteil, daß mit einfachen und kostengünstigen konstruktiven Mitteln eine zuverlässige Verbindung vom Verbraucheranschluß zum Pumpenanschluß und vom Verbraucheranschluß zum Tankanschluß herstellbar ist.

Die besondere Ausführungsart der Erfindung gemäß Anspruch 9 hat den Vorteil, daß eine klare konstruktive Trennung zwischen Verbraucher-, Pumpen- und Tankanschluß gewährleistet ist. Der Pumpen- und Tankanschluß kann dabei stern- oder ringförmig vorgesehen sein.

Die besondere Ausführungsart der Erfindung gemäß Anspruch 10 hat den Vorteil, daß der Regeldruck bzw. Sollwert auch nach der Herstellung des Druckregelventils und sogar nach dem Einbau des Druckregelventils in ein größeres System veränderbar ist.

Die besondere Ausführungsart der Erfindung gemäß Anspruch 11 hat den Vorteil, daß durch die Verwendung des Druckregelventils als Einschraubpatrone das Druckregelventil modular auch in größeren Druckregelsystemen problemlos einsetzbar und austauschbar ist.

Weitere Vorteile, Merkmale und Einzelheiten der Erfindung ergeben sich aus den Unteransprüchen sowie der nachfolgenden Beschreibung, in der unter Bezugnahme auf die Zeichnung ein Ausführungsbeispiel im einzelnen beschrieben ist. Dabei können die in den Ansprüchen und in der Beschreibung erwähnten Merkmale jeweils einzeln für sich oder in beliebiger Kombination erfindungswesentlich sein.

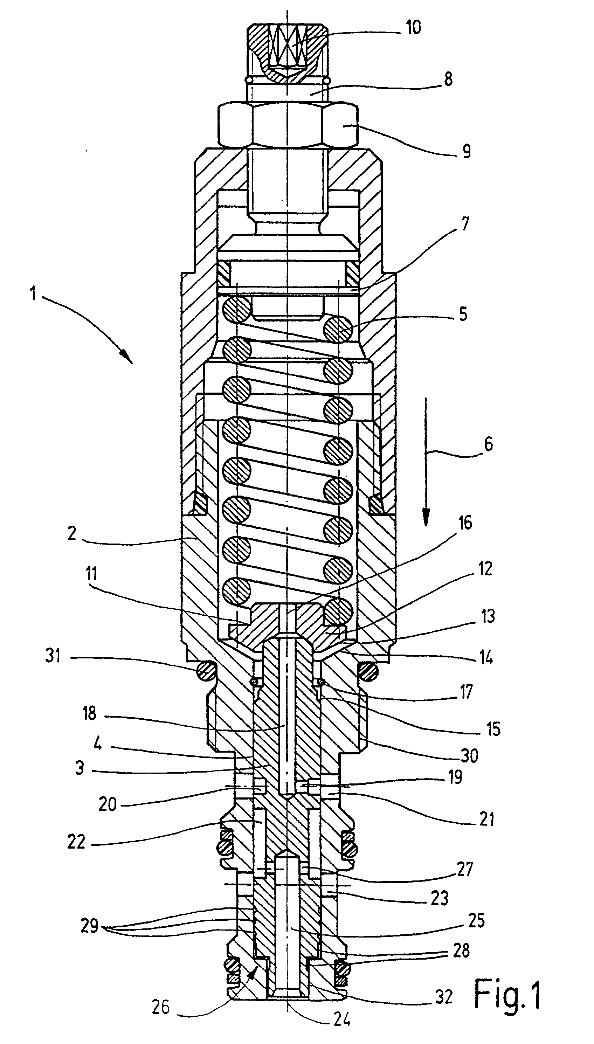

Fig. 1 zeigt einen Schnitt durch ein erfindungsgemäßes Druckregelventil.

Die Fig. 1 zeigt einen Schnitt durch ein erfindungsgemäßes Druckregelventil 1 mit einem Ventilkörper 2 und einem Regelkolben 3. Der Regelkolben 3 ist in dem Ventilkörper 2 in der Ventilbohrung 4 axial geführt und wird durch die Schraubenfeder 5 in Richtung des Pfeils 6 gedrückt. Die Schraubenfeder 5 stützt sich dabei am oberen Ende an einer ersten Scheibe 7 ab, deren horizontale Position über den in den Ventilkörper 2 einschraubbaren Gewindebolzen 8 einstellbar ist. Die Einstellung wird mittels der Kontermutter 9 gesichert. Die Einstellung erfolgt vorzugsweise unter Verwendung eines am ventiläußeren Ende des Bolzens 8 angebrachten Innensechskants 10.

Auf der gegenüberliegenden Seite stützt sich die Schraubenfeder 5 an der Schulter 11 der zweiten Scheibe 12 ab, die in einer zentrischen Bohrung den Regelkolben 3 aufnimmt. Der Regelkolben 3 weist an seinem der zweiten Scheibe 12 zugewandten Ende einen sich verringernden Durchmesser auf und bildet dadurch eine ringförmige Schulter 15 aus, die zusammen mit einem in die Ventilbohrung 4 eingelegten Sicherungsring 17 einen mechanischen Anschlag für die Auslenkung des Regelkolbens 3 entgegen der Richtung des Pfeils 6 bildet.

Der Regelkolben 3 weist in diesem Bereich eine langgestreckte erste Sacklochbohrung 18 auf, die mittels einer ersten Stichbohrung 19 und einer umlaufenden Nut 20 eine Verbindung mit dem Tankanschluß 21 erlaubt. Diese Verbindung setzt sich auch über eine zentrische Bohrung 16 in der zweiten Scheibe 12 fort und erlaubt eine Be- und Entlüftung des Innenraums des Druckregelventils 1 in den Tankanschluß 21.

Im weiteren axialen Verlauf weist der Regelkolben 3 eine axial ausgedehnte, ringförmige Nut 22 auf. Außerdem weist der Regelkolben 3 eine zum axialen Verbraucheranschluß 24 gerichtete zweite Sacklochbohrung 25 auf, die mittels zweiter Stichbohrungen 27 mit der axial ausgedehnten ringförmigen Nut 22 verbunden ist und somit bei entsprechender Stellung des Regelkolbens 3 eine Verbindung zwischen dem radialen Pumpenanschluß 23 und dem axialen Verbraucheranschluß 24 bereitstellt.

Im Bereich des Verbraucheranschlusses 24 weist der Regelkolben 3 einen kleineren Durchmesser auf. An dem durch eine Stufe 26 gebildeten Übergang vom kleineren zum größeren Durchmesser weist sowohl der Abschnitt des Regelkolbens 3 mit dem kleineren Durchmesser als auch der Abschnitt mit dem größeren Durchmesser einen Bereich reduzierten Durchmessers auf, wodurch ein hohlzylinderartiges Volumen 28 entsteht. Im weiteren Verlauf zwischen Verbraucheranschluß 24 und Pumpenschluß 23 weist der Regelkolben 3 drei ringförmige Nuten 29 auf, die als Entlastungsrillen ausgebildet sind.

Der am Verbraucheranschluß 24 gelegene Abschnitt des Regelkolbens 3 ist derart auf den Ventilkörper 2 im Abschnitt 32 eingeschliffen, daß ein Ringspalt mit einem Spiel zwischen 40 µm und 60 µm besteht. Im Bereich des Pumpenanschlusses 23 bildet der Regelkolben 3 mit der Ventilbohrung 4 einen Ringspalt von 8 µm bis 13 µm.

Das Druckregelventil 1 ist über ein Außengewinde 30 als Einschraubpatrone in ein bestehendes Druckregelsystem einschraubbar.

Dabei dient die an einer (nicht dargestellten) Schulter des Druckregelsystems zur Anlage kommende Dichtung 31 der Abdichtung zwischen Druckregelventil und Druckregelsystem.

Übersteigt der Druck am Verbraucheranschluß 24 den vorgebbaren Sollwert, so wird infolge des überhöhten Drucks der Regelkolben 3 gegen die Wirkung der Schraubenfeder 5 entgegen der Richtung des Pfeils 6 bewegt. Dabei wird über den durch das größere Spiel zwischen dem Regelkolben 3 und dem Ventilkörper 2 am Verbraucheranschluß gebildeten Ringspalt ein Ölvolumen in das hohlzylinderartige, sich vergrößernde Volumen zwischen dem Regelkolben 3 und dem Ventilkörper 2 im Bereich der Stufe 26 hineingezogen.

Beim Unterschreiten des Drucks am Verbraucheranschluß 24 wird der Regelkolben 3 entsprechend der auf ihn wirkenden Kraft der Schraubenfeder 5 in Richtung des Pfeils 6 bewegt. Dabei verkleinert sich das im Bereich der Stufe 26 gebildete hohlzylinderartige Volumen und das eingeschlossene Medium muß in Richtung des Pfeiles 6 über den definierten Ringspalt zum Verbraucheranschluß 24 verdrängt werden.

Dieser Verdrängungsvolumenstrom $Q_{Verdrängung}$ läßt sich nach folgender Gleichung bestimmen:

$$Q_{Verdrängung} = \frac{\pi}{4} x (d_a^2 - d_i^2) \times v_{Kolben}$$

wobei $\pi$ die Kreiszahl, da der Innendurchmesser der Ventilbohrung 4 im Abschnitt des Regelkolbens 3 mit dem größeren Durchmesser, di der Außendurchmesser des Regelkolbens 3 im Abschnitt mit dem kleineren Durchmesser und $V_{Kolben}$ die Geschwindigkeit des Regelkolbens 3 ist.

Durch Einsetzen dieses Verdrängungsvolumenstromes $Q_{Verdrängung}$ über den Ringspalt in die Gleichung

$$p_{Druckaufbau} = \frac{Q_{Verdrängung} \times 12 \times \eta \times I}{\pi \times d_m \times h^3}$$

läßt sich der Druckaufbau in dem sich verkleinerten Raum bestimmen, wobei $\eta$ die Viskosität des verdrängten Mediums, l die Spaltlänge, $d_m$ der mittlere Spaltdurchmesser und h die Spalthöhe, beispielsweise 40µm bis 60µm, ist.

Bezogen auf die druckwirksame Fläche läßt sich eine Kraft $F_{Druckaufbau}$ ermitteln, die entgegen der auslenkenden Kraft gerichtet ist und so eine Dämpfung der Bewegung des Regelkolbens 3 bewirkt:

$$F_{Druckaufbau} = p_{Druckaufbau} \times \frac{\pi}{4} \times (d_a^2 - d_i^2)$$

**Patentansprüche**

1. Druckregelventil (1) mit einem in einer Ventilbohrung (4) bewegbaren Regelkolben (3), der unter der Wirkung eines Kraftspeichers (5) in einer Auslenkrichtung einen Pumpenanschluß (23) mit einem Verbraucheranschluß (24) und in der anderen Auslenkrichtung unter Absperren des Pumpenanschlusses (23) den Verbraucheranschluß (24) mit einem Tankanschluß (21) verbindet, **dadurch gekennzeichnet, daß** Mittel vorgesehen sind, durch die unabhängig von der Auslenkrichtung des Regelkolbens (3) ein zwischen diesem und der Ventilbohrung (4) eine Dämpfung der Auslenkbewegung des Regelkolbens (3) bewirkender Volumenstrom vorhanden ist.

**2.** Druckregelventil nach Anspruch 1, **dadurch gekennzeichnet, daß** der Regelkolben (3) am Verbraucheranschluß (24) einen größeren Ringspalt mit der Ventilbohrung (4) bildet als am Pumpenanschluß (23).

**3.** Druckregelventil nach einem der Ansprüche 1 bis 2, **dadurch gekennzeichnet, daß** der Regelkolben (3) zwischen dem Pumpenanschluß (23) und dem Verbraucheranschluß (24) zwei axiale Abschnitte mit zwei unterschiedlichen, eine ringförmige Stufe (26) bildenden Kolbendurchmessern aufweist und in der mit einer entsprechenden ringförmigen Stufe ausgebildeten Ventilbohrung (4) axial bewegbar ist

**4.** Druckregelventil nach Anspruch 3, **dadurch gekennzeichnet, daß** der Volumenstrom einen Schlepp- oder Verdrängungsstromanteil aufweist, der über den größeren Ringspalt am Verbraucheranschluß (24) in das durch axiale Auslenkung des Regelkolbens (3) zwischen der Stufe (26) des Regelkolbens (3) und der Stufe der Ventilbohrung (4) sich vergrößernde oder verkleinernde hohlzylindrische Volumen einströmt bzw. ausströmt.

**5.** Druckregelventil nach einem der Ansprüche 1 bis 4, **dadurch gekennzeichnet, daß** der Regelkolben (3) am Verbraucheranschluß (24) einen kleineren Durchmesser aufweist als am Pumpenanschluß (23).

**6.** Druckregelventil nach einem der Ansprüche 1 bis 5, **dadurch gekennzeichnet, daß** der Kraftspeicher (5) ein mechanischer Kraftspeicher ist, insbesondere eine Schraubenfeder ist.

**7.** Druckregelventil nach einem der Ansprüche 1 bis 6, **dadurch gekennzeichnet, daß** der Regelkolben (3) für die Verbindung vom Verbraucheranschluß (24) zum Pumpenanschluß (23) eine axiale zentrische Bohrung (25) aufweist, und daß der Regelkolben (3) für die Verbindung vom Verbraucheranschluß (24) zum Tankanschluß (21) einen dritten Abschnitt mit reduziertem Durchmesser aufweist, der zusammen mit der Ventilbohrung (4) einen hohlzylindrischen Kanal (22) bildet.

**8.** Druckregelventil nach einem der Ansprüche 1 bis 7, **dadurch gekennzeichnet, daß** der Regelkolben (3) zwischen Pumpenanschluß (23) und Verbraucheranschluß (24) ringförmige Nuten (29) aufweist.

**9.** Druckregelventil nach einem der Ansprüche 1 bis 8, **dadurch gekennzeichnet, daß** der Verbraucheranschluß (24) in Bezug auf die Längsachse des Regelkolbens (3) axial am Druckregelventil (1) angebracht ist, und daß der Pumpenanschluß (23) und der Tankanschluß (21) in Bezug auf die Längsachse des Regelkolbens (3) radial am Druckregelventil (1) angebracht sind.

**10.** Druckregelventil nach einem der Ansprüche 1 bis 9, **dadurch gekennzeichnet, daß** der zu regelnde Druck durch auf den Kraftspeicher (5) wirkende Einstellmittel (8, 9) von außerhalb des Druckregelventils (1) einstellbar ist.

**11.** Druckregelventil nach einem der Ansprüche 1 bis 10, **dadurch gekennzeichnet, daß** das Druckregelventil (1) ein Außengewinde (30) aufweist und als Einschraubpatrone in ein Druckregelsystem einschraubbar ist.

**Claims**

**1.** Pressure control valve (1) having a control piston (3) which is movable in a valve hole (4) and which, under the effect of an energy accumulator (5), connects, in one direction of displacement, a pump connection (23) to a consumer connection (24) and, in the other direction of displacement, the consumer connection (24) to a tank connection (21) with closure of the pump connection (23), **characterised in that** means are provided by which, irrespective of the direction of displacement of the control piston (3), there is provided a volume flow which brings about a damping of the displacement movement of the control piston (3) between the control piston (3) and the valve hole (4).

**2.** Pressure control valve according to claim 1, **characterised in that** the control piston (3) forms a larger annular gap with the valve hole (4) at the consumer connection (24) than at the pump connection (23).

**3.** Pressure control valve according to either claim 1 or claim 2, **characterised in that** the control piston (3) has, between the pump connection (23) and the consumer connection (24), two axial portions having two different piston diameters which form an annular step (26) and is axially movable in the valve hole (4) which is formed with a corresponding annular step.

**4.** Pressure control valve according to claim 3, **characterised in that** the volume flow has a lagging or displacement flow portion which flows into or out of the hollow-cylindrical volume which is increased or decreased by axial displacement of the control piston (3) between the step (26) of the control piston (3) and the step of the valve hole (4) <u>via</u> the relatively large annular gap at the consumer connection (24).

**5.** Pressure control valve according to any one of claims 1 to 4, **characterised in that** the control piston (3) has a smaller diameter at the consumer connection (24) than at the pump connection (23).

**6.** Pressure control valve according to any one of claims 1 to 5, **characterised in that** the energy accumulator (5) is a mechanical energy accumulator, in particular a helical spring.

**7.** Pressure control valve according to any one of claims 1 to 6, **characterised in that** the control piston (3) for the connection of the consumer connection (24) to the pump connection (23) has an axial central hole (25), and **in that** the control piston (3) for the connection of the consumer connection (24) to the tank connection (21) has a third portion of reduced diameter which forms a hollow-cylindrical duct (22) together with the valve hole (4).

**8.** Pressure control valve according to any one of claims 1 to 7, **characterised in that** the control piston (3) has annular channels (29) between the pump connection (23) and the consumer connection (24).

**9.** Pressure control valve according to any one of claims 1 to 8, **characterised in that** the consumer connection (24) is fitted axially to the pressure control valve (1) relative to the longitudinal axis of the control piston (3), and **in that** the pump connection (23) and the tank connection (21) are fitted radially to the pressure control valve (1) relative to the longitudinal axis of the control piston (3).

**10.** Pressure control valve according to any one of claims 1 to 9, **characterised in that** the pressure to be controlled is adjustable from outside the pressure control valve (1) by adjustment means (8, 9) which act on the energy accumulator (5).

**11.** Pressure control valve according to any one of claims 1 to 10, **characterised in that** the pressure control valve (1) has an outer thread (30) and, in the form of a screw-in cartridge, can be screwed into a pressure control system.

**Revendications**

**1.** Soupape régulatrice de pression (1) avec un piston de réglage susceptible de se déplacer dans un alésage de soupape (4), qui relie sous l'effet d'un accumulateur de force (5) dans une direction de déviation un raccordement de pompe (23) avec un raccordement de consommateur (24) et dans l'autre direction de déviation avec la fermeture du raccordement de pompe (23) le raccordement de consommateur (24) avec un raccordement de réservoir (21), **caractérisée en ce qu'**il est prévu des moyens par lesquels il existe indépendamment de la direction de déviation du piston de réglage (3) un flux volumique entraînant entre ce piston et l'alésage de soupape (4) un amortissement du mouvement de déviation du piston de réglage (3).

**2.** Soupape régulatrice de pression selon la revendication 1, **caractérisée en ce que** le piston de réglage (3) forme sur le raccordement de consommateur (24) une fente annulaire avec l'alésage de soupape (4) plus grande que sur le raccordement de pompe (23).

**3.** Soupape régulatrice de pression selon l'une quelconque des revendications 1 à 2, **caractérisée en ce que** le piston de réglage (3) présente entre le raccordement de pompe (23) et le raccordement du consommateur (24) deux parties axiales avec deux diamètres de piston différents et formant un étage (25) de forme annulaire et peut se déplacer axialement dans l'alésage de soupape (4) réalisé avec un étage approprié de forme annulaire.

**4.** Soupape régulatrice de pression selon la revendication 3, **caractérisée en ce que** le flux volumique présente une part de flux de remorquage ou de refoulement, qui entre ou sort par la fente annulaire plus grande sur le raccordement de consommateur (24) dans le volume cylindrique creux qui s'agrandit ou se réduit du fait de la déviation axiale du piston de réglage (3) entre le niveau (26) du piston de régalage (3) et le niveau de l'alésage de soupape (4).

**5.** Soupape régulatrice de pression selon l'une quelconque des revendications 1 à 4, **caractérisée en ce que** le piston de réglage (3) présente sur le raccordement de consommateur (24) un diamètre plus petit que sur le raccordement de pompe (23).

**6.** Soupape régulatrice de pression selon l'une quelconque des revendications 1 à 5, **caractérisée en ce que** l'accumulateur de force (5) est un accumulateur de force mécanique, en particulier un ressort hélicoïdal.

**7.** Soupape régulatrice de pression selon l'une quelconque des revendications 1 à 6, **caractérisée en ce que** le piston de réglage (3) présente un alésage (25) central axial pour la liaison du raccordement de consommateur (24) au raccordement de pompe (23), et ce que le piston de réglage (3) présente pour la liaison du raccordement de consommateur (24) au raccordement de réservoir (21) une troisième partie avec un diamètre réduit, qui forme conjointement avec l'alésage de soupape (4) un canal (22) cylindrique creux.

**8.** Soupape régulatrice de pression selon l'une quelconque des revendications 1 à 7, **caractérisée en ce que** le piston de réglage (3) présente des rainures (29) de forme annulaire entre le raccordement de pompe (23) et le raccordement de consommateur (24).

**9.** Soupape régulatrice de pression selon l'une quelconque des revendications 1 à 8, **caractérisée en ce que** le raccordement de consommateur (24) est disposé axialement près de la soupape régulatrice de pression par rapport à l'axe longitudinal du piston de réglage (3) et **en ce que** le raccordement de pompe (23) et le raccordement de réservoir (21) sont disposés radialement près de la soupape régulatrice de pression (1) par rapport à l'axe longitudinal du piston de réglage (3).

**10.** Soupape régulatrice de pression selon l'une quelconque des revendications 1 à 9, **caractérisée en ce que** la pression à régler peut être réglée par des moyens de réglage (8, 9) agissant sur l'accumulateur de force (5) par l'extérieur de la soupape régulatrice de pression.

**11.** Soupape régulatrice de pression selon l'une quelconque des revendications 1 à 10, **caractérisée en ce que** la soupape régulatrice de pression (1) présente un filet externe (30) et peut être vissée comme une cartouche à vis dans un système de réglage de pression.

Fig.1